# EUROPEAN PATENT APPLICATION

(11) **EP 2 605 414 A1**
(43) Date of publication of application: **19.06.2013**
(21) Application number: 11829314.1
(22) Date of filing: 29.09.2011
(51) Int. Cl.: H04B 1/50

(54) **MOBILE COMMUNICATION TERMINAL, METHOD FOR COMMUNICATION WITH MULTIPLE FREQUENCIES SIMULTANEOUSLY**

(30) Priority: 30.09.2010 JP 2010221746
(71) Applicant: NTT DOCOMO, INC., Chiyoda-ku Tokyo 100-6150 (JP)
(72) Inventor: SUZUKI, Hidetoshi, Tokyo 100-6150 (JP); UMEDA, Hiromasa, Tokyo 100-6150 (JP); OKADA, Takashi, Tokyo 100-6150 (JP)
(74) Representative: Reichl, Wolfgang
(86) International application number: PCT/JP2011/072458
(87) International publication number: WO 2012/043761

(57) **Abstract**

In order to enable simultaneous communication using a plurality of frequencies, provided is a mobile communication terminal including: a first combining circuit 210 that receives transmission signals of two frequency bands, and outputs a combined signal; a triplexer 220 including: a transmitting filter 221 that filters the signal inputted by the first combining circuit 210 and outputs the resultant signal; and a receiving filter A 222 and a receiving filter B 223 that each filter an inputted given signal and output the resultant signal; a combined signal filter 230 including: a filter P 231 having the same pass characteristic as that of the transmitting filter 221; and a filter Q 232 having the same pass characteristic as that of the receiving filter B 223, the combined signal filter 230 filtering the signal outputted by the first combining circuit 210 and outputting the resultant signal; a phase adjuster 240 that adjusts a phase of the signal outputted by the combined signal filter 230 to a phase opposite to that of an interference signal, and outputs the resultant signal; and a second combining circuit 250 that combines the signal outputted by the phase adjuster 240 with a signal (interference signal) that passes through both the transmitting filter 221 and the receiving filter B 223.

## Description

### [TECHNICAL FIELD]

The present invention relates to a mobile communication terminal that performs simultaneous communication using a plurality of frequencies and a method for simultaneous communication using a plurality of frequencies.

### [BACKGROUND ART]

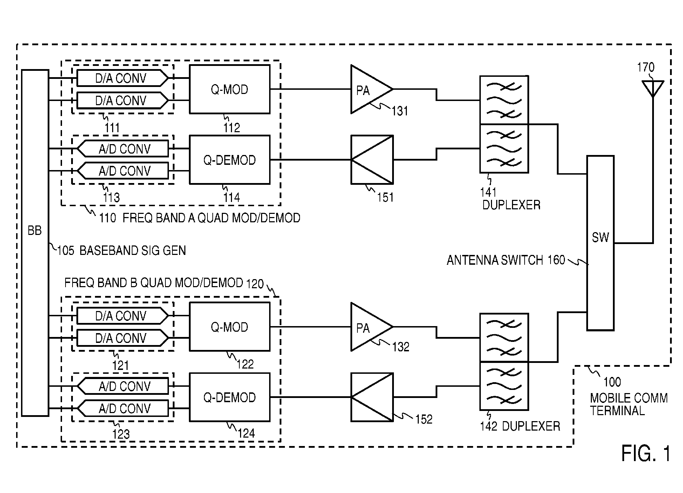

The outline of a conventional mobile communication terminal using a plurality of frequency bands is described with reference to Fig. 1. Fig. 1 is a block diagram illustrating a configuration example of a mobile communication terminal 100 of a conventional art using two types of frequency bands. The mobile communication terminal 100 of the conventional art includes a baseband signal generator (BB) 105, a frequency band A quadrature modulating/demodulating part 110, a frequency band B quadrature modulating/demodulating part 120, power amplifiers 131 and 132, duplexers 141 and 142, low noise amplifiers 151 and 152, an antenna switch (SW) 160, and a transmitting/receiving antenna 170. The frequency band A quadrature modulating/demodulating part 110 includes a D/A converter 111, a quadrature modulator (Q-mod) 112, an A/D converter 113, and a quadrature demodulator (Q-demod) 114. The frequency band B quadrature modulating/demodulating part 120 includes a D/A converter 121, a quadrature modulator (Q-mod) 122, an A/D converter 123, and a quadrature demodulator (Q-demod) 124. In addition to the above-mentioned constituent parts, the conventional mobile communication terminal may include an isolator, a band limiting filter (BPF), and the like, which are omitted for simplification of description. Further, one quadrature modulating/demodulating part may be shared by a frequency band A and a frequency band B, but is divided and illustrated for each frequency band in the configuration here, for ease of description.

The baseband signal generator (BB) 105 generates two series of digital baseband signals from voice, data information, or the like to be transmitted, and outputs the two series of digital baseband signals to the frequency band A quadrature modulating/demodulating part 110 or the frequency band B quadrature modulating/demodulating part 120.
Hereinafter, description is given of the case where the frequency band A is selected on the basis of frequency band information transmitted from a base station and where the two series of digital baseband signals are outputted to the frequency band A quadrature modulating/demodulating part 110, in order to perform communication using the frequency band A. The D/A converter 111 converts the two series of inputted digital baseband signals into two analog signals, and outputs the two analog signals to the quadrature modulator (Q-mod) 112. The quadrature modulator (Q-mod) 112 subjects the inputted two analog signals to frequency conversion into the frequency band A, combines the obtained I/Q signals to generate a frequency band A transmission signal, and outputs the frequency band A transmission signal to the power amplifier 131. The power amplifier 131 amplifies the inputted frequency band A transmission signal to a desired power, and outputs the amplified frequency band A transmission signal to the duplexer 141.

Here, the duplexer 141 separates (filters) the inputted signal according to a transmission band and a reception band, to thereby prevent the frequency band A transmission signal from flowing into a receiving circuit of the frequency band A (a circuit connected to the baseband signal generator (BB) 105 through the low noise amplifier 151, the quadrature demodulator 114, and the A/D converter 113). Accordingly, in this case, the duplexer 141 outputs the inputted amplified frequency band A transmission signal to the antenna switch (SW) 160. Such a pass characteristic of the duplexer 141 prevents the amplified frequency band A transmission signal from leaking into the receiving circuit of the frequency band A. Here, in the case of communication using the frequency band A, the antenna switch (SW) 160 brings the duplexer 141 and the transmitting/receiving antenna 170 into electrical connection with each other. In contrast, in the case of communication using the frequency band B, the antenna switch (SW) 160 brings the duplexer 142 and the transmitting/receiving antenna 170 into electrical connection with each other. Consequently, the antenna switch (SW) 160 outputs the inputted amplified frequency band A transmission signal to the transmitting/receiving antenna 170. The transmitting/receiving antenna 170 transmits the inputted amplified frequency band A transmission signal to, for example, the base station that is a transmission destination.

Meanwhile, in the case where a frequency band A reception signal is inputted to the transmitting/receiving antenna 170, the transmitting/receiving antenna 170 outputs the frequency band A reception signal to the antenna switch (SW) 160. The antenna switch (SW) 160 outputs the inputted frequency band A reception signal to the duplexer 141. The duplexer 141 outputs the inputted frequency band A reception signal to the low noise amplifier 151. The low noise amplifier 151 amplifies the inputted frequency band A reception signal, and outputs the amplified frequency band A reception signal to the quadrature demodulator (Q-demod) 114. The quadrature demodulator (Q-demod) 114 separates the inputted frequency band A reception signal into I/Q signals while down-converting the same into the baseband (BB) frequency, and outputs the down-converted baseband signals to the A/D converter 113. The A/D converter 113 converts the inputted down-converted signals from analog signals to digital signals, and outputs the converted digital signals to the baseband signal generator (BB) 105. The baseband signal generator (BB) 105 restores the inputted digital signals into voice or data information.

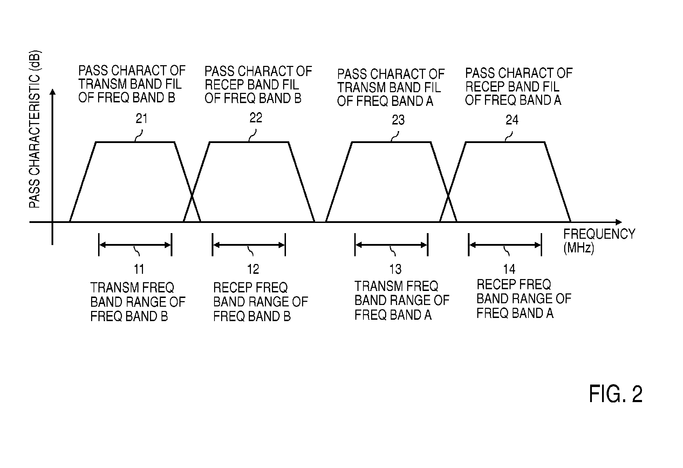

In the case where the baseband signal generator (BB) 105 inputs baseband signals to the frequency band B quadrature
modulating/demodulating part 120 or where a frequency band B reception signal is inputted to the transmitting/receiving antenna 170, an operation similar to that for the frequency band A is performed. Next, transmission/reception frequency bands and a filter configuration example in the above-mentioned conventional mobile communication terminal 100 are described. Fig. 2 is a diagram illustrating pass characteristics of transmission band filters and reception band filters of respective frequency bands in the mobile communication terminal 100 of the conventional art. Fig. 2 illustrates: a transmission frequency band range 13 of the frequency band A; a reception frequency band range 14 of the frequency band A; a transmission frequency band range 11 of the frequency band B; and a reception frequency band range 12 of the frequency band B. Further, Fig. 2 illustrates: a pass characteristic 23 of the transmission band filter of the frequency band A; a pass characteristic 24 of the reception band filter of the frequency band A; a pass characteristic 21 of the transmission band filter of the frequency band B; and a pass characteristic 22 of the reception band filter of the frequency band B. In this example, the frequency band A is located on a higher frequency side than the frequency band B, and the reception frequency band range of each frequency band is located on a higher frequency side than the transmission frequency band range of each frequency band.
The duplexer 141 is formed of the combination of the transmission band filter of the frequency band A and the reception band filter of the frequency band A. Similarly, the duplexer 142 is formed of the combination of the transmission band filter of the frequency band B and the reception band filter of the frequency band B. The horizontal axis of the graph of Fig. 2 represents a frequency (MHz), and the vertical axis thereof represents a pass characteristic (dB).

In mobile communication services for mobile phones and the like, it is necessary to use a plurality of frequency bands in consideration of accommodation of communication users and expansion of service areas. For this reason, in a conventional mobile communication terminal such as the above-mentioned mobile communication terminal 100, one transmitting/receiving antenna is shared by a plurality of frequency bands. Further, the conventional mobile communication terminal changes over an antenna switch in accordance with the used frequency band. A reception signal of each frequency band is distributed to a receiving circuit dedicated to each frequency band by changing over the antenna switch, and hence a transmission signal of a given frequency band can be prevented from leaking into a receiving circuit and a transmitting circuit of frequency bands different from the given frequency band. With these arts, the conventional mobile communication terminal can reduce the circuit loss compared with that of a method of branching a signal, and hence a plurality of frequencies can be switched while the level of receiving sensitivity is secured.

Further, Patent literature 1 discloses a conventional repeater apparatus (a relay apparatus, a radio relay booster). The repeater apparatus of Patent literature 1 includes an interference suppressing device including an A/D converter, delay adding means, a D/A converter, interference signal detecting means, suppression signal generating means, and signal combining means. The A/D converter converts a reception signal down-converted to a baseband into a digital signal. The signal combining means combines the digital signal with a suppression signal to suppress interference. The delay adding means adds a predetermined delay to the signal outputted from the signal combining means. The D/A converter converts the signal outputted from the delay adding means into an analog signal. The analog signal is up-converted into a higher frequency band, and is transmitted. The interference signal detecting means performs correlative arithmetic processing between the output signal of the A/D converter and the output signal of the delay adding means, and detects an interference signal. On the basis of the interference signal detected by the interference signal detecting means, the suppression signal generating means generates a suppression signal that is the same in amplitude and delay as the interference signal and is opposite in phase thereto, and gives the suppression signal to the signal combining means.

### [PRIOR ART LITERATURE]

### [PATENT LITERATURE]

Patent literature 1: Japanese Patent Application Laid-Open No. 2005-039336

### [SUMMARY OF THE INVENTION]

### [PROBLEM TO BE SOLVED BY THE INVENTION]

The conventional mobile communication terminal illustrated in Fig. 1 distributes reception signals to the receiving circuits of the respective frequency bands by changing over the antenna switch, and thus cannot perform communication using a plurality of frequency bands simultaneously. For this reason, the conventional mobile communication terminal cannot be applied to communication using a plurality of frequencies simultaneously, which is discussed in a future communication scheme (LTE-Advanced). In the conventional mobile communication terminal, for example, a method of transmitting/receiving transmission/reception signals of a plurality of frequency bands simultaneously through a triplexer, a quadriplexer, and the like instead of changing over an antenna switch can be conceived as a method of achieving a communication scheme using a plurality of frequency bands simultaneously. In this method, unfortunately, in the case where the frequencies of a given transmission band and a given reception band are close to each other, a transmission signal of the close transmission band leaks into a receiving circuit, so that the receiving performance remarkably decreases.

To solve this, the interference suppressing art of the repeater apparatus disclosed in Patent literature 1 is combined with the conventional mobile communication terminal. That is, an interference signal (transmission signal) that leaks into the receiving circuit is subjected to A/D conversion and then combined with a suppression signal opposite in phase, to be thereby eliminated. As a result, it seems possible to prevent such a decrease in receiving performance. In Patent literature 1, however, a suppression signal is digitally combined after A/D conversion in a baseband. Hence, if this is applied to the conventional mobile communication terminal 100, for example, the interference suppressing device needs to be disposed on the output side of the A/D converter 113, so that an interference signal that leaks into the receiving circuit is amplified by the low noise amplifier 151 (or 152), and flows into the frequency band A (or B) quadrature modulating/demodulating part 110 (120). As a result, a large amount of signal unfavorably flows into the low noise amplifier 151 (152), the low noise amplifier 151 (152) is saturated, and distortion occurs in a reception signal itself. After that, even if the interference signal (transmission signal) is combined with the suppression signal opposite in phase to be thereby removed, the distortion that occurs in the reception signal cannot be removed, with the result that the receiving performance remarkably decreases. In view of the above, the present invention provides a mobile communication terminal that can perform communication using a plurality of frequency bands simultaneously and can prevent a decrease in receiving performance.

### [MEANS TO SOLVE THE PROBLEMS]

A mobile communication terminal of the present invention includes: a transmitting/receiving antenna; a first combining circuit that receives transmission signals of two frequency bands, combines the inputted transmission signals of the two frequency bands, and outputs the resultant signal; a triplexer including: a transmitting filter that receives the signal outputted by the first combining circuit, filters the signal outputted by the first combining circuit, and outputs the resultant signal to the transmitting/receiving antenna; a receiving filter A that filters a given signal inputted from the transmitting/receiving antenna, and outputs the resultant signal; and a receiving filter B that filters the given signal inputted from the transmitting/receiving antenna, and outputs the resultant signal; a combined signal filter including: a filter P having the same pass characteristic as that of the transmitting filter; and a filter Q having the same pass characteristic as that of the receiving filter B, the combined signal filter filtering the signal outputted by the first combining circuit and outputting the resultant signal; a phase adjuster that adjusts a phase of the signal outputted by the combined signal filter to a phase opposite to that of an interference signal, and outputs the resultant signal; and a second combining circuit that combines the signal outputted by the phase adjuster with part (interference signal) of the signal outputted by the first combining circuit, the part passing through both the transmitting filter and the receiving filter B.

### [EFFECTS OF THE INVENTION]

According to the mobile communication terminal of the present invention, because frequency matching is adjusted by the triplexer, communication can be performed using a plurality of frequency bands simultaneously while the circuit loss is suppressed to be low. Further, because the signal that is adjusted by the phase adjuster to be opposite in phase to the interference signal is combined with the interference signal, even in the case where a transmission frequency band range of one of the plurality of used frequency bands is close to a reception frequency band range of another one of the frequency bands, the interference signal that flows into a receiving circuit is suppressed, and the receiving performance can be secured.

### [BRIEF DESCRIPTION OF THE DRAWINGS]

Fig. 1 is a block diagram illustrating a configuration example of a mobile communication terminal of a conventional art using two types of frequency bands;
Fig. 2 is a diagram illustrating pass characteristics of transmission band filters and reception band filters of respective frequency bands in the mobile communication terminal of the conventional art;
Fig. 3 is a block diagram illustrating an example in which a triplexer is combined with the mobile communication terminal of the conventional art;
Fig. 4 is a diagram illustrating pass characteristics of a transmitting filter, a receiving filter A, and a receiving filter B in the example in which the triplexer is combined with the mobile communication terminal of the conventional art;
Fig. 5 is a diagram for describing the occurrence of an interference signal when a combined transmission signal of a frequency band A/B is inputted, in the example in which the triplexer is combined with the mobile communication terminal of the conventional art;
Fig. 6 is a block diagram illustrating a configuration example of a mobile communication terminal according to a first embodiment of the present invention;
Fig. 7 is a flow chart illustrating an operation example of the mobile communication terminal according to the first embodiment of the present invention;
Fig. 8 is a block diagram illustrating a configuration example of a mobile communication terminal according to a second embodiment of the present invention;
Fig. 9 is a flow chart illustrating an operation example of the mobile communication terminal according to the second embodiment of the present invention;
Fig. 10 is a block diagram illustrating a configuration example of a mobile communication terminal according to a third embodiment of the present invention;
Fig. 11 is a diagram illustrating pass characteristics of a transmitting filter, a receiving filter A, a receiving filter B, and a receiving filter C in a mobile communication terminal according to a fourth embodiment of the present invention; and
Fig. 12 is a block diagram illustrating a configuration example of the mobile communication terminal according to the fourth embodiment of the present invention.

### [DETAILED DESCRIPTION OF THE EMBODIMENTS]

Hereinafter, embodiments of the present invention are described in detail. Note that constituent parts having the same functions are denoted by the same reference signs, and overlapping description is omitted.

### [FIRST EMBODIMENT]

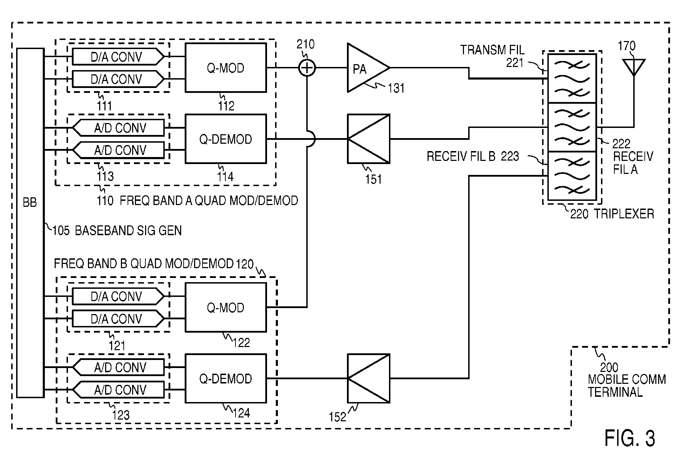

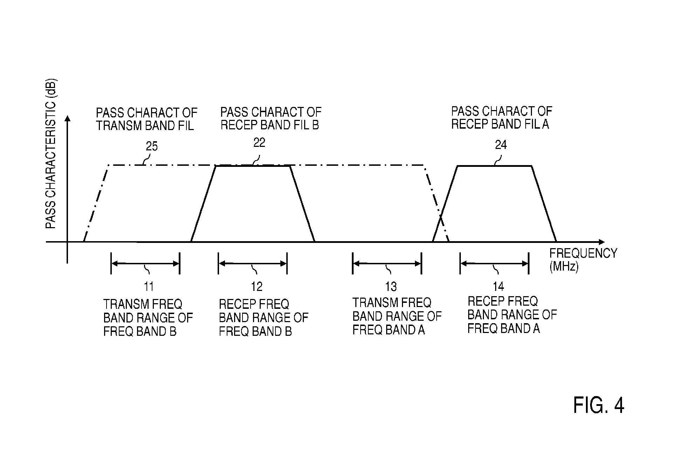

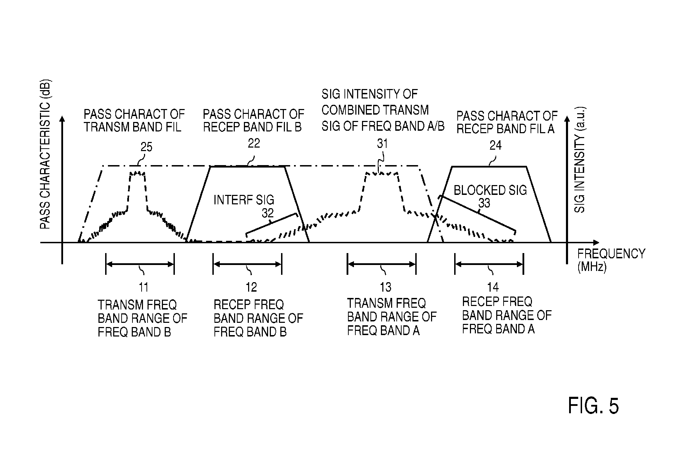

First, a mobile communication terminal 200 is described with reference to Fig. 3, Fig. 4, and Fig. 5. The mobile communication terminal 200 is given as an example in which communication using a plurality of frequencies simultaneously is enabled by combining a triplexer with the conventional mobile communication terminal 100. Fig. 3 is a block diagram illustrating a configuration of the mobile communication terminal 200 at a stage prior to reaching the present invention, in which a triplexer is combined with the mobile communication terminal of the conventional art. Fig. 4 is a diagram illustrating pass characteristics of a transmitting filter, a receiving filter A, and a receiving filter B of the mobile communication terminal 200. Fig. 5 is a diagram for describing the occurrence of an interference signal when a combined transmission signal of a frequency band A/B is inputted, in the mobile communication terminal 200 of Fig. 3. The mobile communication terminal 200 includes a baseband signal generator (BB) 105, a frequency band A quadrature modulating/demodulating part 110, a frequency band B quadrature modulating/demodulating part 120, a first combining circuit 210, a power amplifier 131, low noise amplifiers 151 and 152, a triplexer 220, and a transmitting/receiving antenna 170. The configurations of the frequency band A quadrature modulating/demodulating part 110 and the frequency band B quadrature modulating/demodulating part 120 are the same as the corresponding configurations in Fig. 1, and hence description thereof is omitted.
The triplexer 220 includes a transmitting filter 221, a receiving filter A 222, and a receiving filter B 223. The baseband signal generator (BB) 105, the frequency band A quadrature modulating/demodulating part 110, the frequency band B quadrature modulating/demodulating part 120, the power amplifier 131, the low noise amplifiers 151 and 152, and the transmitting/receiving antenna 170 of the mobile communication terminal 200 have the same functions as those of the mobile communication terminal 100 of the conventional art, and hence description thereof is omitted.

Here, the transmitting filter 221, the receiving filter A 222, and the receiving filter B 223 are described in detail with reference to Fig. 4. Fig. 4 illustrates: a transmission frequency band range 13 of a frequency band A; a reception frequency band range 14 of the frequency band A; a transmission frequency band range 11 of a frequency band B; and a reception frequency band range 12 of the frequency band B. Further, Fig. 4 illustrates: a pass characteristic 25 of the transmitting filter 221; a pass characteristic 24 of the receiving filter A 222; and a pass characteristic 22 of the receiving filter B 223. The pass characteristic 25 of the transmitting filter 221 is shown by an alternate long and short dash line, and the other pass characteristics are each shown by a solid line. The triplexer 220 includes the transmitting filter 221, the receiving filter A 222, and the receiving filter B 223 each having one end connected to the transmitting/receiving antenna 170. The transmitting filter 221 receives a signal generated by combining a frequency band A transmission signal generated by the quadrature modulator (Q-mod) 112 with a frequency band B transmission signal generated by the quadrature modulator (Q-mod) 122, and the detail thereof is described later. The transmitting filter 221 is a filter that allows the signal generated by combining to pass therethrough, and hence the pass characteristic 25 of the transmitting filter is a broad pass characteristic that can cover both the transmission frequency band range of the frequency band A and the transmission frequency band range of the frequency band B. The receiving filter A 222 and the receiving filter B 223 are filters respectively used for a frequency band A reception signal and a frequency band B reception signal, and hence the pass characteristic 24 of the receiving filter A 222 and the pass characteristic 22 of the receiving filter B 223 are the same respectively as the pass characteristic 24 of the reception band filter of the frequency band A and the pass characteristic 22 of the reception band filter of the frequency band B that are illustrated in Fig. 2. Accordingly, the pass characteristic 22 of the receiving filter B 223 of the frequency band B falls within the range of the pass characteristic 25 of the transmitting filter 221, whereas the pass characteristic 24 of the receiving filter A 222 is outside of the pass characteristic of the transmitting filter. The horizontal axis of the graph of Fig. 4 represents a frequency (MHz), and the vertical axis thereof represents a pass characteristic (dB).

Next, constituent parts of the mobile communication terminal 200 that have functions different from those of the conventional mobile communication terminal 100 are described in detail. The first combining circuit 210 receives the frequency band A transmission signal outputted from the quadrature modulator (Q-mod) 112 and the frequency band B transmission signal outputted from the quadrature modulator (Q-mod) 122, combines the frequency band A transmission signal with the frequency band B transmission signal, and outputs the resultant signal as a combined transmission signal to the power amplifier 131. The power amplifier 131 amplifies the inputted combined transmission signal to a desired power, and outputs the amplified combined transmission signal to the transmitting filter 221. The transmitting filter 221 filters the inputted amplified combined transmission signal, and outputs the filtered signal to the transmitting/receiving antenna 170. The transmitting/receiving antenna 170 transmits the inputted amplified combined transmission signal to, for example, a base station that is a transmission destination. The signal transmitted from the transmitting/receiving antenna 170 is referred to as combined reception signal, in the mobile communication terminal on the receiver side.

Meanwhile, in the case where a combined reception signal (frequency bands A and B) is inputted to the transmitting/receiving antenna 170, the transmitting/receiving antenna 170 outputs the combined reception signal (frequency bands A and B) to the receiving filter A 222 and the receiving filter B 223 of the triplexer 220. The receiving filter A 222 filters the inputted combined reception signal to obtain only a frequency band A reception signal, and inputs the frequency band A reception signal to the low noise amplifier 151. The processing subsequent to the low noise amplifier 151 is the same as that in the mobile communication terminal 100, and hence description thereof is omitted. Similarly to the receiving filter A 222, the receiving filter B 223 filters the inputted combined reception signal to obtain only a frequency band B reception signal, and inputs the frequency band B reception signal to the low noise amplifier 152. The processing subsequent to the low noise amplifier 152 is the same as that in the mobile communication terminal 100, and hence description thereof is omitted. In this way, the mobile communication terminal 200 configured by combining the triplexer with the conventional mobile communication terminal 100 enables communication using the plurality of frequencies (frequencies A and B) simultaneously.

Here, with reference to Fig. 5, description is given in detail of the case where a combined transmission signal is inputted to the transmitting filter 221. In Fig. 5, a frequency characteristic of the signal intensity of the combined transmission signal is superimposed on the pass characteristics of Fig. 4. In Fig. 5, the frequency characteristic of the combined transmission signal intensity (a.u.) is shown by a broken line as a frequency characteristic 31 of the combined transmission signal intensity of the frequency band A/B. Because the combined transmission signal is generated by combining the transmission signals of the frequency band A and the frequency band B with each other, the signal intensity of the combined transmission signal exhibits its peak within the transmission frequency band range of the frequency band A and within the transmission frequency band range of the frequency band B. Here, the pass characteristic 25 of the transmitting filter 221 is a broad pass characteristic that can cover both the transmission frequency band ranges of the frequency band A and the frequency band B, and hence a portion of the combined transmission signal having a high signal intensity passes through the transmitting filter 221 without being significantly attenuated (without being blocked) by the transmitting filter 221. Part of the combined transmission signal is blocked by the transmitting filter 221, and cannot pass through the transmitting filter 221, the part being in a frequency band range in which the pass characteristic of the transmitting filter is zero. The signal blocked by the transmitting filter 221 is referred to as a blocked signal 33, and is illustrated in Fig. 5. Accordingly, the remaining part of the combined transmission signal after subtraction of the blocked signal 33 passes through the transmitting filter 221. Part (an interference signal 32 in Fig. 5) of the signal that passes therethrough is not attenuated by even the receiving filter B 223, and leaks into a receiving circuit of the frequency band B (a circuit connected to the baseband signal generator 105 through the low noise amplifier 152, the quadrature demodulator 124, and the A/D converter 123), the part being in a range in which the pass characteristic of the receiving filter B 223 is not zero. Because the interference signal 32 leaks into the receiving circuit of the frequency band B, the receiving performance of the frequency band B decreases in the mobile communication terminal 200.

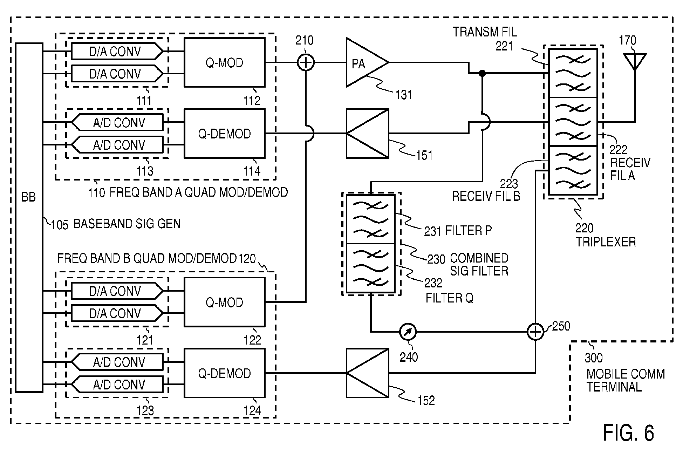

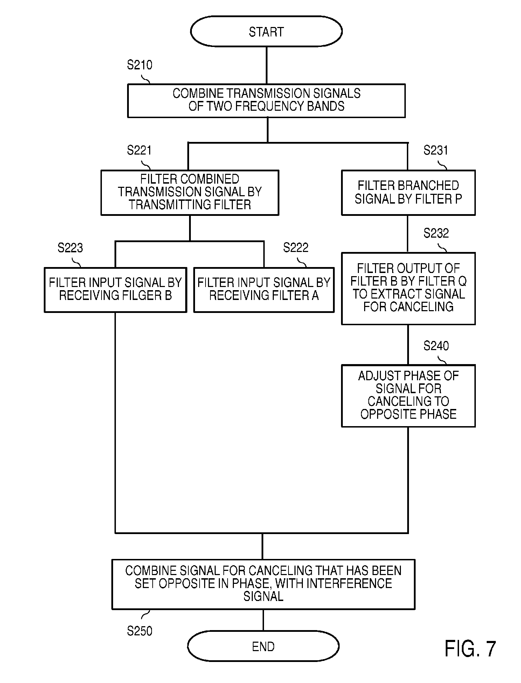

A mobile communication terminal 300 according to a first embodiment of the present invention is described in detail with reference to Fig. 6 and Fig. 7. The mobile communication terminal 300 can suppress the interference signal 32. Fig. 6 is a block diagram illustrating a configuration example of the mobile communication terminal 300 according to the first embodiment of the present invention. Fig. 7 is a flow chart illustrating an operation example of the mobile communication terminal 300 according to the first embodiment of the present invention. The mobile communication terminal 300 includes the baseband signal generator (BB) 105, the frequency band A quadrature modulating/demodulating part 110, the frequency band B quadrature modulating/demodulating part 120, the first combining circuit 210, the power amplifier 131, the low noise amplifiers 151 and 152, the triplexer 220, the transmitting/receiving antenna 170, a combined signal filter 230, a phase adjuster 240, and a second combining circuit 250. The configurations of the frequency band A quadrature modulating/demodulating part 110 and the frequency band B quadrature modulating/demodulating part 120 are the same as the corresponding configurations in Fig. 1.

The triplexer 220 includes the transmitting filter 221, the receiving filter A 222, and the receiving filter B 223 each having one end connected to the transmitting/receiving antenna 170. The combined signal filter 230 includes a filter P 231 and a filter Q 232 connected in series to each other. The baseband signal generator (BB) 105, the frequency band A quadrature modulating/demodulating part 110, the frequency band B quadrature modulating/demodulating part 120, the power amplifier 131, the low noise amplifiers 151 and 152, and the transmitting/receiving antenna 170 of the mobile communication terminal 300 have the same functions as those of the mobile communication terminal 100 of the conventional art, and hence description thereof is omitted.

Next, constituent parts of the mobile communication terminal 300 that have functions different from those of the conventional mobile communication terminal 100 are described in detail. The first combining circuit 210 receives the frequency band A transmission signal outputted from the quadrature modulator (Q-mod) 112 and the frequency band B transmission signal outputted from the quadrature modulator (Q-mod) 122, combines the frequency band A transmission signal with the frequency band B transmission signal, and outputs the resultant signal as a combined transmission signal to the power amplifier 131 (S210). The power amplifier 131 amplifies the inputted combined transmission signal to a desired power, and outputs the amplified combined transmission signal to the transmitting filter 221. The transmitting filter 221 filters the inputted amplified combined transmission signal, and outputs the filtered signal to the transmitting/receiving antenna 170 (S221). The transmitting/receiving antenna 170 transmits the inputted amplified combined transmission signal to, for example, the base station that is a transmission destination. The receiving filter A filters an inputted given signal, and outputs components of the reception frequency band range of the frequency band A (S222). Similarly to the receiving filter A, the receiving filter B filters the inputted given signal, and outputs components of the reception frequency band range of the frequency band B (S223).

Here, the combined signal filter 230 is described in detail. The combined signal filter 230 includes the filter P 231 and the filter Q 232 connected in series to each other. The filter P 231 is a filter having the same pass characteristic as that of the transmitting filter 221. The filter Q 232 is a filter having the same pass characteristic as that of the receiving filter B 223. The amplified combined transmission signal outputted by the power amplifier 131 is branched into a signal to be inputted to the transmitting filter 221 and a signal to be inputted to the combined signal filter 230, and an output of the transmitting filter 221 is transmitted as a transmission signal from the transmitting/receiving antenna 170. The combined signal filter 230 filters the inputted combined transmission signal by means of the filter P and the filter Q, extracts components of the interference signal 32 illustrated in Fig. 5 as a signal for canceling, and gives the signal for canceling to the phase adjuster 240 (S231, S232). The phase adjuster 240 adjusts the phase of the signal for canceling extracted by the combined signal filter 230, to the phase opposite to that of the interference signal 32 that leaks into the input side of the low noise amplifier 152 through the transmitting filter 221 and the receiving filter B 223, and the phase adjuster 240 gives the resultant signal to the second combining circuit 250 (S240). The second combining circuit 250 combines the signal for canceling that is adjusted to be opposite in phase to the leakage interference signal, with part (the interference signal 32 in Fig. 5) of the amplified combined transmission signal outputted by the power amplifier 131, the part passing through both the transmitting filter 221 and the receiving filter B 223, whereby the second combining circuit 250 cancels out the signals each other (S250).

S210 to S250 do not necessarily need to be executed in the order described above, and may be executed as appropriate in parallel and concurrently. In order to suppress the interference signal 32 with high accuracy, a loss in a path that reaches the second combining circuit 250 through the transmitting filter 221 and the receiving filter B 223 needs to be equal to a loss in a path that reaches the second combining circuit 250 through the filter P 231, the filter Q 232, and the phase adjuster 240. Power amplifiers or power attenuators may be used as appropriate to adjust these path losses. The phase and amplitude of the suppression signal are adjusted such that the output level of the low noise amplifier 152 is the minimum (or equal to or less than a predetermined value) when the frequency band A reception signal does not exist. Further, in the present embodiment, the power amplifier 131 is located on the transmitting/receiving antenna 170 side of the first combining circuit 210, and a combined transmission signal is amplified after its generation, but the present invention is not limited thereto. For example, as illustrated in Fig. 1, both the power amplifier 131 of the frequency band A and the power amplifier 132 of the frequency band B may be provided. Then, transmission signals of the respective frequency bands generated by the quadrature modulators (Q-mods) 112 and 122 are respectively amplified by the power amplifiers of the respective frequency bands, and the amplified transmission signals of the respective frequency bands are combined with each other, whereby the combined transmission signal may be generated.

In this way, according to the mobile communication terminal 300 of the present invention, because frequency matching is adjusted by the triplexer 220, communication can be performed using a plurality of frequency bands simultaneously while the circuit loss is suppressed to be low. Further, because the signal that is adjusted by the phase adjuster 240 to be opposite in phase to the interference signal is combined with the interference signal 32 that flows into the receiving circuit, even in the case where the transmission frequency band range of the frequency band A and the reception frequency band range of the frequency band B are close to each other, the interference signal 32 that flows into the receiving circuit is suppressed, and necessary receiving performance can be secured. Further, according to the mobile communication terminal 300 of the present invention, the signal that is adjusted to be opposite in phase to the interference signal is combined with the interference signal 32, whereby the interference signal is eliminated. Hence, a different transmitting/receiving antenna does not need to be provided for each frequency band, and communication using a plurality of frequencies simultaneously can be achieved by one transmitting/receiving antenna 170, so that a significant increase in size can be avoided compared with the size of the conventional mobile communication terminal. Further, according to the mobile communication terminal 300 of the present invention, an opposite-phase signal is generated directly from a transmission signal using analog passive devices such as the filters 231 and 232, the phase adjuster 240, and the second combining circuit 250. Hence, the accuracy of interference signal elimination can be made higher than that of the interference signal suppressing method implemented by digital arithmetic processing in the repeater apparatus of Patent literature 1. In addition, such digital arithmetic processing as that in Patent literature 1 is not required at the time of generation of the opposite-phase signal, and hence consumed power can be made smaller.

Further, according to the mobile communication terminal 300 of the present invention, the interference signal is suppressed on the transmitting/receiving antenna 170 side of the low noise amplifier 151 (152), and hence distortion of a reception signal caused by saturation of the low noise amplifier 151 (152) does not occur. Further, according to the mobile communication terminal 300 of the present invention, such digital processing as that in the interference signal suppressing method implemented in the repeater apparatus of Patent literature 1 is not performed, and hence the amount of consumed power can be reduced compared with that of the interference signal suppressing method of Patent literature 1.

### [SECOND EMBODIMENT]

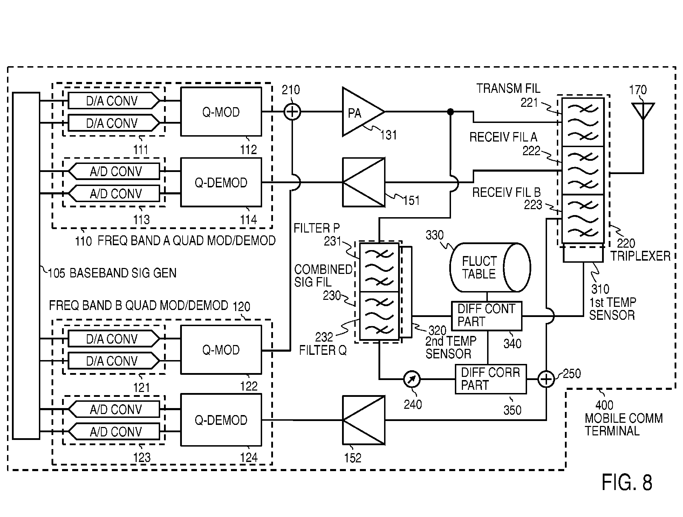

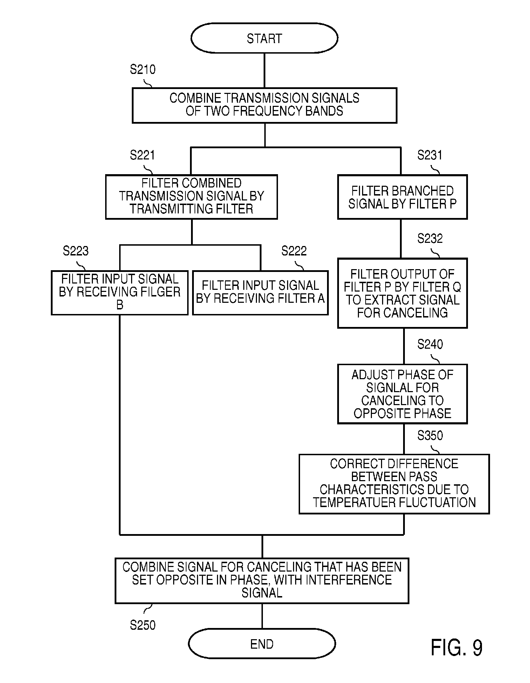

As described above, the pass characteristic of the transmitting filter 221 needs to be coincident with the pass characteristic of the filter P 231, and the pass characteristic of the receiving filter B needs to be coincident with the pass characteristic of the filter Q 232. These pass characteristics however may fluctuate due to an influence of a temperature fluctuation or the like. A mobile communication terminal 400 is described in detail with reference to Fig. 8 and Fig. 9. The mobile communication terminal 400 can prevent such a fluctuation in pass characteristics due to the temperature fluctuation. Fig. 8 is a block diagram illustrating a configuration example of the mobile communication terminal 400 according to a second embodiment of the present invention. Fig. 9 is a flow chart illustrating an operation example of the mobile communication terminal 400 according to the second embodiment of the present invention. The mobile communication terminal 400 according to the present embodiment includes the baseband signal generator (BB) 105, the frequency band A quadrature modulating/demodulating part 110, the frequency band B quadrature modulating/demodulating part 120, the first combining circuit 210, the power amplifier 131, the low noise amplifiers 151 and 152, the triplexer 220, the transmitting/receiving antenna 170, the combined signal filter 230, the phase adjuster 240, the second combining circuit 250, a first temperature sensor 310, a second temperature sensor 320, a fluctuation table 330, a difference controlling part 340, and a difference correcting part 350. Constituent parts other than the first temperature sensor 310, the second temperature sensor 320, the fluctuation table 330, the difference controlling part 340, and the difference correcting part 350 have the same functions as those of the mobile communication terminal 300 of the first embodiment, and hence description thereof is omitted.

Next, operations of the constituent parts specific to the mobile communication terminal 400 according to the present embodiment are described in detail. The first temperature sensor 310 outputs the temperature of the triplexer 220 to the difference controlling part 340 at regular time intervals. The second temperature sensor 320 outputs the temperature of the combined signal filter 230 to the difference controlling part 340 at regular time intervals. The fluctuation table 330 records therein a temperature value set of the temperature of the triplexer 220 and the temperature of the combined signal filter 230 in association with a pass characteristic difference value. The pass characteristic difference value here refers to a difference between the pass characteristic of the triplexer 220 and the pass characteristic of the combined signal filter 230 when the triplexer 220 and the combined signal filter 230 are in a temperature state indicated by the associated temperature value set. The difference controlling part 340 searches the fluctuation table 330 for a temperature value coincident with the temperature of the triplexer 220 and the temperature of the combined signal filter 230 that are inputted at regular time intervals, and acquires a pass characteristic difference value associated with the coincident temperature value set. The difference controlling part 340 generates a difference signal representing the acquired pass characteristic difference value, and outputs the difference signal to the difference correcting part 350. The difference correcting part 350 corrects the combined transmission signal that is adjusted by the phase adjuster 240 to be opposite in phase to the interference signal and is outputted therefrom, in accordance with the inputted difference signal (S350). S350 may be executed in parallel and concurrently with S210 to S250. In this way, according to the mobile communication terminal 400 of the present invention, because the difference correcting part 350 corrects a difference between the pass characteristics of the triplexer 220 and the combined signal filter 230 due to a temperature fluctuation, an influence of the temperature fluctuation can be removed, and the receiving performance can be secured.

### [THIRD EMBODIMENT]

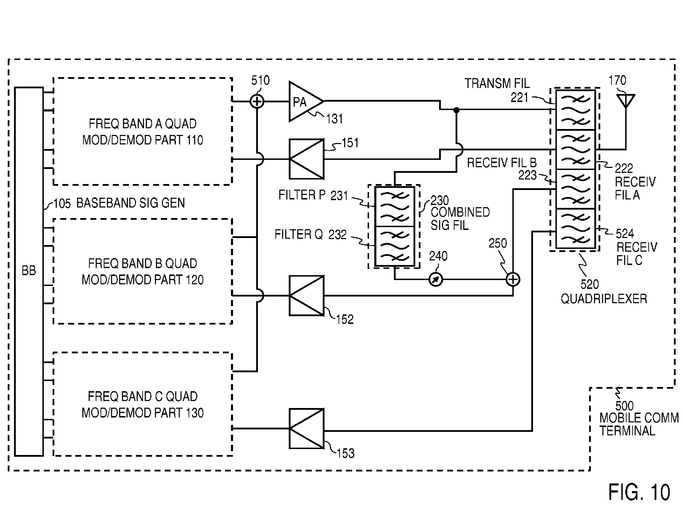

Next, a mobile communication terminal 500 according to a third embodiment is described with reference to Fig. 10. In the mobile communication terminal 500, the triplexer 220 in the mobile communication terminal 300 of the first embodiment is replaced with a quadriplexer 520, and communication using a plurality of frequencies simultaneously is enabled for three frequency bands. Fig. 10 is a block diagram illustrating a configuration example of the mobile communication terminal 500 according to the present embodiment. The mobile communication terminal 500 of the present embodiment includes the baseband signal generator (BB) 105, the frequency band A quadrature modulating/demodulating part 110, the frequency band B quadrature modulating/demodulating part 120, a frequency band C quadrature modulating/demodulating part 130, a first combining circuit 510, the power amplifier 131, the low noise amplifiers 151 and 152, a low noise amplifier 153, the quadriplexer 520, the transmitting/receiving antenna 170, the combined signal filter 230, the phase adjuster 240, and the second combining circuit 250. In the present embodiment, constituent parts denoted by the same reference signs as those in the mobile communication terminal 300 of the first embodiment have the same functions as those of the corresponding constituent parts in the first embodiment, and hence description thereof is omitted. Further, the first combining circuit 510 combines a frequency band A transmission signal, a frequency band B transmission signal, and a frequency band C transmission signal that are respectively inputted by the frequency band A quadrature modulating/demodulating part 110, the frequency band B quadrature modulating/demodulating part 120, and the frequency band C quadrature modulating/demodulating part 130, and the first combining circuit 510 outputs the resultant signal as a combined transmission signal to the power amplifier 131. Further, the frequency band C quadrature modulating/demodulating part 130 is the same in function as the frequency band A quadrature modulating/demodulating part 110 and the like, and is different therefrom only in that transmission and reception signals as its output and input are a frequency band C transmission signal and a frequency band C reception signal, respectively. Further, the low noise amplifier 153 has exactly the same function as those of the low noise amplifiers 151 and 152, receives a frequency band C reception signal, amplifies the inputted frequency band C reception signal, and outputs the amplified frequency band C reception signal to the frequency band C quadrature
modulating/demodulating part 130.

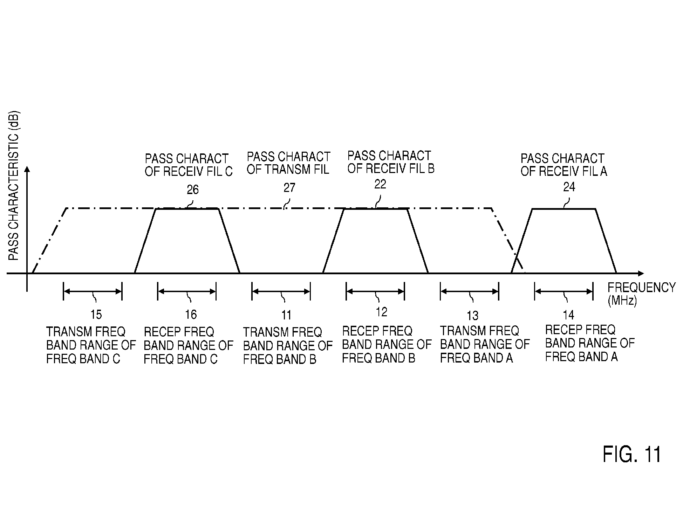

Next, the quadriplexer 520 included in the mobile communication terminal 500 of the present embodiment is described. Fig. 11 illustrates a relation between the frequency bands and pass characteristics of the filters.
It is assumed here that the frequency band C is on a lower frequency side than the frequency band B. The quadriplexer 520 includes the transmitting filter 221, the receiving filter A 222, the receiving filter B 223, and a receiving filter C 524 each having one end connected to the transmitting/receiving antenna 170. The receiving filter A 222 and the receiving filter B 223 have the same functions as those included in the mobile communication terminal 300 of the first embodiment, and respectively have the same characteristics as the pass characteristics 24 and 22 illustrated in Fig. 5. The receiving filter C 524 has a high pass characteristic 26 in a reception frequency band range of the frequency band C, and the receiving filter C 524 can allow a frequency band C reception signal to pass therethrough and can block reception signals of the other frequency bands. The transmitting filter 221 has a pass characteristic 27 that allows transmission signals from a transmission frequency band range of the frequency band C to a transmission frequency band range of the frequency band A to pass therethrough. It is assumed here that, similarly to the first embodiment, the transmission frequency band range of the frequency band A and the reception frequency band range of the frequency band B are close to each other and that a combined transmission signal (frequency band A/B/C) amplified by the power amplifier 131 leaks as the interference signal 32 into the receiving circuit of the frequency band B through the transmitting filter 221 and the receiving filter B 223. In this case, the combined signal filter 230, the phase adjuster 240, and the second combining circuit 250 operate in the same manner as that in the mobile communication terminal 300 of the first embodiment, and can eliminate the interference signal 32 that flows into the receiving circuit of the frequency band B. The frequency band A and the frequency band B defined in the present embodiment are not specific frequency bands. In the situation where given two frequency bands are close to each other and where signal components of one of the frequency bands leak as the interference signal 32 into a receiving circuit of another one of the frequency bands, the frequency band of the receiving circuit into which the interference signal 32 flows is defined as the frequency band B, the frequency band close to the defined frequency band B is defined as the frequency band A, and the other frequency bands are defined as the frequency band C. In this way, a circuit configuration of the third embodiment can be achieved, and the receiving performance in communication using a plurality of frequencies simultaneously can be secured.

Further, even in the case where the quadriplexer 520 of the present embodiment is further extended, where communication using a plurality of frequency bands simultaneously is thus achieved for four frequency bands, five frequency bands, and the like, and where two of the frequency bands are close to each other, the two frequency bands are defined as the frequency bands A and B, and a circuit configuration that eliminates the interference signal 32 is achieved, whereby the receiving performance can be secured. Further, the mobile communication terminal 500 of the present embodiment may further include the first temperature sensor 310, the second temperature sensor 320, the fluctuation table 330, the difference controlling part 340, and the difference correcting part 350. What is different in this case is only that the first temperature sensor 310 outputs the temperature of not the triplexer 220 but the quadriplexer 520 to the difference controlling part 340 at regular time intervals. Operations of the other constituent parts are the same as those of the constituent parts denoted by the same reference signs in the mobile communication terminal 400 of the second embodiment and the mobile communication terminal 500 of the third embodiment, and hence description thereof is omitted.

In this way, according to the mobile communication terminal 500 of the present invention, because frequency matching is adjusted by the quadriplexer 520, communication can be performed using a plurality of frequency bands simultaneously while the circuit loss is suppressed to be low. Further, because the signal that is adjusted by the phase adjuster 240 to be opposite in phase to the interference signal is combined with the interference signal 32 that flows into the receiving circuit, even in the case where the transmission frequency band range of the frequency band A and the reception frequency band range of the frequency band B are close to each other, the interference signal 32 that flows into the receiving circuit is suppressed, and the receiving performance can be secured.

### [FOURTH EMBODIMENT]

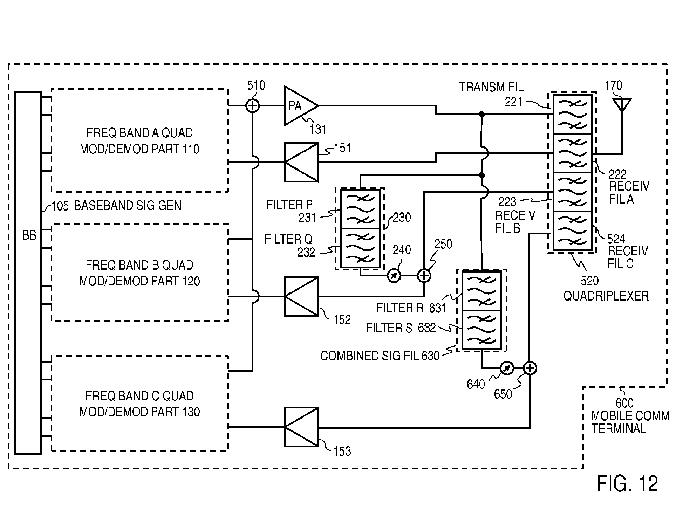

Next, a mobile communication terminal 600 according to a fourth embodiment is described with reference to Fig. 12. In the mobile communication terminal 600, a combined signal filter 630, a phase adjuster 640, and a third combining circuit 650 are further added to the mobile communication terminal 500 of the third embodiment, and an interference signal that leaks into a receiving circuit of the frequency band C can also be eliminated. The transmitting filter 221, the receiving filter A (222), the receiving filter B (223), and the receiving filter C (524) in the mobile communication terminal according to the fourth embodiment have the same pass characteristics as those illustrated in Fig. 11. First, a mutual relation among frequency band ranges in the present embodiment is described with reference to Fig. 11. Also in the present embodiment, it is assumed that the transmission frequency band range 13 of the frequency band A is close to the reception frequency band range 12 of the frequency band B. In this case, an interference signal may leak into the receiving circuit of the frequency band B (the circuit that reaches the baseband signal generator 105 through the low noise amplifier 152). This is the same as in the third embodiment. In the present embodiment, it is further assumed that the transmission frequency band range 11 of the frequency band B is close to a reception frequency band range 16 of the frequency band C. In this case, a frequency band B transmission signal may leak into a receiving circuit of the frequency band C (a circuit that reaches the baseband signal generator 105 through the low noise amplifier 153) to become an interference signal. The present embodiment provides the mobile communication terminal 600 that can secure the receiving performance while suppressing interference signals even in the case where interference signal leakage may occur in both the receiving circuits of the frequency bands B and C as described above. The mobile communication terminal 600 of the present embodiment includes the baseband signal generator (BB) 105, the frequency band A quadrature modulating/demodulating part 110, the frequency band B quadrature modulating/demodulating part 120, the frequency band C quadrature modulating/demodulating part 130, the first combining circuit 510, the power amplifier 131, the low noise amplifiers 151, 152, and 153, the quadriplexer 520, the transmitting/receiving antenna 170, the combined signal filters 230 and 630, the phase adjusters 240 and 640, the second combining circuit 250, and the third combining circuit 650. Constituent parts denoted by the same reference signs as those in the mobile communication terminal 500 of the third embodiment have the same functions also in the present embodiment, and hence description thereof is omitted.

Here, the combined signal filter 630 is described in detail. The combined signal filter 630 includes a filter R 631 and a filter S 632 connected in series to each other. The filter R 631 is a filter having the same pass characteristic as that of the transmitting filter 221. The filter S 632 is a filter having the same pass characteristic as that of the receiving filter C 524. The amplified combined transmission signal outputted by the power amplifier 131 is branched into: a signal to be inputted to the transmitting filter 221; a signal to be inputted to the combined signal filter 230; and a signal to be inputted to the combined signal filter 630. The combined signal filter 630 filters the inputted combined transmission signal by means of the filter R and the filter S, and outputs the filtered combined transmission signal to the phase adjuster 640. The phase adjuster 640 receives the combined transmission signal filtered by the combined signal filter 630, adjusts the phase of the filtered combined transmission signal to the phase opposite to that of the interference signal, and outputs the resultant signal to the third combining circuit 650.
The third combining circuit 650 combines the combined transmission signal that is adjusted to be opposite in phase to the interference signal, with part (interference signal) of the amplified combined transmission signal outputted by the power amplifier 131, the part passing through both the transmitting filter 221 and the receiving filter C 524.

Further, even in the case where the quadriplexer 520 of the present embodiment is further extended, where communication using a plurality of frequency bands simultaneously is thus achieved for four frequency bands, five frequency bands, and the like, and where three of the frequency bands are close to each other, the three frequency bands are defined as the frequency bands A, B, and C, and a circuit configuration that eliminates the interference signal is achieved, whereby the receiving performance can be secured. Further, the first temperature sensor 310 may be used for the quadriplexer 520 in the mobile communication terminal 600 of the present embodiment, and a set of the second temperature sensor 320, the fluctuation table 330, the difference controlling part 340, and the difference correcting part 350 may be added to each of the combined signal filters 230 and 630. In this case, operations of the constituent parts are the same as those of the constituent parts denoted by the same reference signs in the mobile communication terminal 400 of the second embodiment, and hence description thereof is omitted.

In this way, according to the mobile communication terminal 600 of the present invention, because frequency matching is adjusted by the quadriplexer 520, communication can be performed using a plurality of frequency bands simultaneously while the circuit loss is suppressed to be low. Further, because the signal that is adjusted by each of the phase adjusters 240 and 640 to be opposite in phase to the interference signal is combined with the interference signal that flows into each receiving circuit, even in the case where the transmission frequency band range of the frequency band A and the reception frequency band range of the frequency band B are close to each other and where the transmission frequency band range of the frequency band B and the reception frequency band range of the frequency band C are close to each other, the interference signal that flows into each receiving circuit is suppressed, and the receiving performance can be secured.

In the respective embodiments described above with reference to Figs. 6, 8, 10, and 12, the combined signal filter 230 includes: the filter P 231 having the same pass characteristic as that of the transmitting filter 221; and the filter Q 232 having the same pass characteristic as that of the receiving filter B 223, where the filter P 231 and the filter Q 232 are connected in series to each other. Alternatively, it is obvious that the combined signal filter 230 may include only the filter Q 232 having the same pass characteristic as that of the receiving filter B 223, as long as a filter having an ideal characteristic, in which the pass characteristic 25 is flat over the corresponding band range as illustrated in Fig. 5, can be achieved as the transmitting filter 221. In that case, it is preferable to dispose a level adjuster (not illustrated) in a path of the phase adjuster 240 to thereby make such adjustment that the signal for canceling is opposite in phase and equal in level to the interference signal. Practically, a dip normally occurs in a pass band, and hence it is preferable that the combined signal filter 230 include the filter Q 232 and the filter P 231 connected in series to each other. Similarly, the filter R 631 may be omitted from the combined signal filter 630 in Fig. 12.

## Claims

1. A mobile communication terminal that performs simultaneous communication using a plurality of frequencies, comprising:
a transmitting/receiving antenna;
a first combining circuit that receives transmission signals of two frequency bands, combines the inputted transmission signals of the two frequency bands, and outputs the resultant signal;
a triplexer including:
a transmitting filter that receives the signal outputted by the first combining circuit, filters the signal outputted by the first combining circuit, and outputs the resultant signal to the transmitting/receiving antenna;
a receiving filter A that filters a given signal inputted from the transmitting/receiving antenna, and outputs the resultant signal; and
a receiving filter B that filters the given signal inputted from the transmitting/receiving antenna, and outputs the resultant signal;
a combined signal filter including: a filter P having the same pass characteristic as that of the transmitting filter; and a filter Q having the same pass characteristic as that of the receiving filter B, the combined signal filter filtering the signal outputted by the first combining circuit and outputting the resultant signal;
a phase adjuster that adjusts a phase of the signal outputted by the combined signal filter to a phase opposite to that of an interference signal, and outputs the resultant signal; and
a second combining circuit that combines the signal outputted by the phase adjuster with part, that is the interference signal, of the signal outputted by the first combining circuit, the part of the signal being passed through both the transmitting filter and the receiving filter B.

2. The mobile communication terminal according to claim 1, further comprising:
a first temperature sensor that measures a temperature of the triplexer;
a second temperature sensor that measures a temperature of the combined signal filter; and
a difference correcting part that corrects power of the signal outputted by the phase adjuster, on a basis of temperature measurement results of the first temperature sensor and the second temperature sensor, and outputs the corrected signal to the second combining circuit.

3. A mobile communication terminal that performs simultaneous communication using a plurality of frequencies, comprising:
a transmitting/receiving antenna;
a first combining circuit that receives transmission signals of three frequency bands, combines the inputted transmission signals of the three frequency bands, and outputs the resultant signal;
a quadriplexer including:
a transmitting filter that receives the signal outputted by the first combining circuit, filters the signal outputted by the first combining circuit, and outputs the resultant signal to the transmitting/receiving antenna;
a receiving filter A that filters a given signal inputted from the transmitting/receiving antenna, and outputs the resultant signal;
a receiving filter B that filters the given signal inputted from the transmitting/receiving antenna, and outputs the resultant signal; and
a receiving filter C that filters the given signal inputted from the transmitting/receiving antenna, and outputs the resultant signal;
a combined signal filter including: a filter P having the same pass characteristic as that of the transmitting filter; and a filter Q having the same pass characteristic as that of the receiving filter B, the combined signal filter filtering the signal outputted by the first combining circuit and outputting the resultant signal;
a phase adjuster that adjusts a phase of the signal outputted by the combined signal filter to a phase opposite to that of an interference signal, and outputs the resultant signal; and
a second combining circuit that combines the signal outputted by the phase adjuster with part, that is the interference signal, of the signal outputted by the first combining circuit, the part of the signal being passed through both the transmitting filter and the receiving filter B.

4. The mobile communication terminal according to claim 3, further comprising:
a first temperature sensor that measures a temperature of the quadriplexer;
a second temperature sensor that measures a temperature of the combined signal filter; and
a difference correcting part that corrects power of the signal outputted by the phase adjuster, on a basis of temperature measurement results of the first temperature sensor and the second temperature sensor, and outputs the corrected signal to the second combining circuit.

5. A method for simultaneous communication using a plurality of frequencies, comprising:
a first combining step of receiving transmission signals of two frequency bands, combining the inputted transmission signals of the two frequency bands, and outputting the resultant signal;
a transmission filtering step of receiving the signal outputted in the first combining step, filtering the signal outputted in the first combining step, and outputting the resultant signal to a transmitting/receiving antenna;
a reception filtering step A of filtering a given signal inputted from the transmitting/receiving antenna, and outputting the resultant signal;
a reception filtering step B of filtering the given signal inputted from the transmitting/receiving antenna, and outputting the resultant signal;
a filtering step P of filtering the signal outputted in the first combining step on a basis of the same pass characteristic as that in the transmission filtering step, and outputting the resultant signal
a filtering step Q of filtering the signal outputted in the filtering step P on a basis of the same pass characteristic as that in the receiving filter B step, and outputting the resultant signal;
a phase adjusting step of adjusting a phase of the signal outputted in the filtering step Q to a phase opposite to that of an interference signal, and outputting the resultant signal; and
a second combining step of combining the signal outputted in the phase adjusting step with part, that is the interference signal, of the signal outputted in the first combining step, the part being obtained by executing both the transmission filtering step and the reception filtering step B.

6. A mobile communication terminal that performs simultaneous communication using a plurality of frequencies, comprising:
a transmitting/receiving antenna;
a first combining circuit that receives transmission signals of first and second frequency bands different from each other, combines the transmission signals, and generates a combined transmission signal;
a triplexer including:
a transmitting filter having a pass characteristic that covers from a transmission frequency band range of the first frequency band to a transmission frequency band range of the second frequency band, the transmitting filter filtering the combined transmission signal and outputting the resultant signal to the transmitting/receiving antenna;
a first receiving filter having a reception frequency band range of the first frequency band as a pass characteristic, the first receiving filter filtering a reception signal inputted from the transmitting/receiving antenna and outputting the resultant signal as a first frequency band reception signal; and
a second receiving filter having a reception frequency band range of the second frequency band as a pass characteristic, the second receiving filter filtering the reception signal inputted from the transmitting/receiving antenna and outputting the resultant signal;
a combined signal filter that extracts, as a signal for canceling, components included in the reception frequency band range of the second frequency band, from the combined transmission signal;
a phase adjuster that adjusts a phase of the signal for canceling to a phase opposite to that of an interference signal that is caused by the output of the transmitting filter leaking through the second receiving filter, and outputs the resultant signal; and
a second combining circuit that combines the signal outputted by the phase adjuster with the output of the second receiving filter, and outputs the resultant signal as a second frequency band reception signal.

7. A mobile communication terminal that performs simultaneous communication using a plurality of frequencies, comprising:
a transmitting/receiving antenna;
a first combining circuit that receives transmission signals of first, second, and third frequency bands different from one another, combines the transmission signals, and outputs the resultant signal as a combined transmission signal;
a quadriplexer including:
a transmitting filter having a pass characteristic that covers from a transmission frequency band range of the first frequency band to a transmission frequency band range of the third frequency band, the transmitting filter filtering the combined transmission signal and outputting the resultant signal to the transmitting/receiving antenna;
a first receiving filter having a reception frequency band range of the first frequency band as a pass characteristic, the first receiving filter filtering a reception signal inputted from the transmitting/receiving antenna and outputting the resultant signal as a first frequency band reception signal;
a second receiving filter having a reception frequency band range of the second frequency band as a pass characteristic, the second receiving filter filtering the reception signal inputted from the transmitting/receiving antenna and outputting the resultant signal; and
a third receiving filter having a reception frequency band range of the third frequency band as a pass characteristic, the third receiving filter filtering the reception signal inputted from the transmitting/receiving antenna and outputting the resultant signal as a third frequency band reception signal;
a combined signal filter that extracts, as a signal for canceling, components included in the reception frequency band range of the second frequency band, from the combined transmission signal;
a phase adjuster that adjusts a phase of the signal for canceling to a phase opposite to that of an interference signal that is caused by the output of the transmitting filter leaking through the second receiving filter, and outputs the resultant signal; and
a second combining circuit that combines the signal outputted by the phase adjuster with the output of the second receiving filter, and outputs the resultant signal as a second frequency band reception signal.
